# EUROPEAN PATENT APPLICATION

(11) **EP 2 323 394 A2**
(43) Date of publication of application: **18.05.2011**
(21) Application number: 10016136.3
(22) Date of filing: 08.09.2006
(51) Int. Cl.: H04N 7/24

(54) **Method and apparatus for providing preview service using electronic service guide in a digital broadcasting system**

(30) Priority: 09.09.2005 KR 20050084389; 18.11.2005 KR 20050110977; 13.04.2006 KR 20060033712
(62) Divisional of application: 06120385.7
(71) Applicant: Samsung Electronics Co., Ltd., Suwon-si, Gyeonggi-do 443-742 (KR)
(72) Inventor: Song, Jae-Yeon, Suwon-si Gyeonggi-do 443-742 (KR); Lee, Hye-Young, Suwon-si Gyeonggi-do 443-742 (KR); Lee, Kook-Heui, Suwon-si Gyeonggi-do 443-742 (KR); Jung, Bo-Sun, Suwon-si Gyeonggi-do 443-742 (KR)
(74) Representative: Grünecker, Kinkeldey, Stockmair & Schwanhäusser Anwaltssozietät

(57) **Abstract**

A method and apparatus for providing a preview service using an ESG in a digital broadcasting system are provided. Metadata of ongoing broadcasting services are collected. In the presence of preview data for the preview service among the collected metadata, information associated with the preview service is set in a Related Material element included in at least one of a service fragment, a content fragment, and a service bundle fragment in an ESG data model and representing referenced media data. ESG data including the fragments are generated and sent to a terminal.

## Description

### BACKGROUND OF THE INVENTION

### 1. Field of the Invention

The present invention relates generally to a digital broadcasting system, and in particular, to a method and apparatus for more efficiently providing a preview service by sending information required for the preview service in an Electronic Service Guide (ESG).

### 2. Description of the Related Art

Transmission technology for digital broadcasting finds its use in a variety of broadcasting systems including Digital Audio Broadcasting (DAB), Digital Video Broadcasting (DVB), and Digital Multimedia Broadcasting (DMB). DVB is employed as a digital transmission standard in Europe, supporting mobile and portable digital multimedia services as well as existing digital broadcasting.

The DVB system can multiplex Moving Picture Experts Group-2 (MPEG2) Transport Stream (TS)-based broadcasting data and Internet Protocol (IP)-based data streams and send them simultaneously. Also, the DVB system can multiplex a plurality of services in one IP stream for transmission. When receiving the data of the IP stream, a terminal demultplexes the IP stream into individual services, demodulates TSs of an intended service, and visually outputs the demodulated TSs to a user. Many times the user requests information of the services available in the DVB system and the contents of the individual services.

To provide information about the individual services, the DVB system uses an ESG. ESG data contains time and content information of the services and reception and purchase information of the content. For efficient transmission of the ESG data, the DVB system configures an ESG data model and decides on transmission data based on the ESG data model.

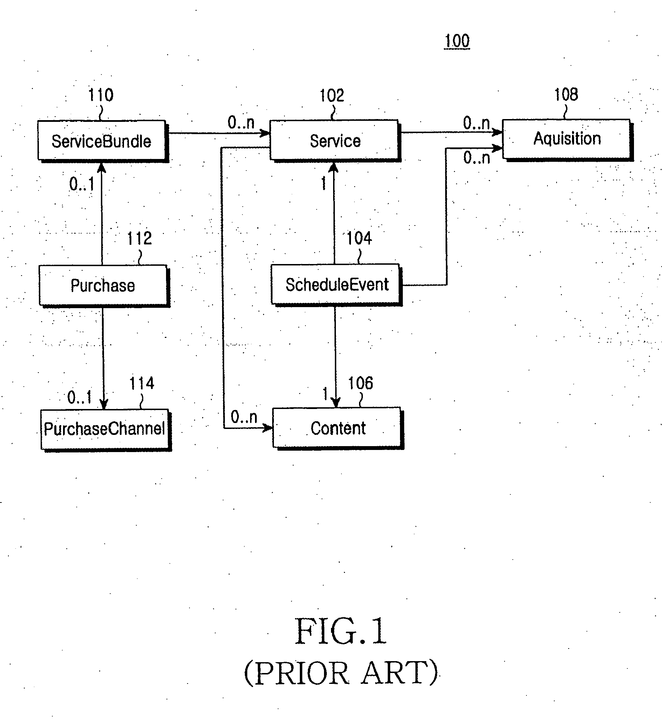

FIG. 1 is a graphical representation of the ESG data model.

Referring to FIG. 1, each data block represents an ESG data fragment. To be specific, an ESG data model 100 contains a service fragment 102, a schedule event fragment 104, a content fragment 106, an acquisition fragment 108, a service bundle fragment 110, a purchase fragment 112, and a purchase channel fragment 114.

The service fragment 102 provides a description of an entire service. The schedule event fragment 104 provides time information of a service. The acquisition fragment 108 has information necessary to receive actual data. The service bundle fragment 110 is used to group one or more services in a service bundle. The purchase fragment 112 provides information about the price to purchase the service bundle. The purchase channel fragment 114 provides information about a system which enables the purchase of rights to consume the service bundle.

In the ESG data model, each fragment may reference another fragment, and the references between the fragments are depicted as arrows. A reference is defined as a provisioning of information associated with one fragment by information carried in another fragment. For example, if one service is composed of a plurality of content, the service fragment 102 describes the service comprehensively by providing the name and language of the service. For example, while referring to the content fragment 106 of corresponding contents for a description of the contents sent by the service. Various pieces of information needed for the terminal to receive the service can be demodulated by receiving the acquisition fragment 108 to which the service fragment 102 refers.

Each of the fragments has the Identifier (ID) of another fragment to which it refers. For example, if the service fragment 102 refers to particular content, the service fragments 102 explicitly has the ID of the content fragment 106 to which it refers.

The ESG data model 100 is sent to the terminal by a separate IP stream at a different times from an actual data stream. Therefore, a service provider can send all information that the user requires before receiving an actual service in the ESG data model 100.

The ESG data model 100 may serve purposes other than as a guide. Particularly, if access to a service is limited such that some content can be consumed only by purchase, the ESG data model 100 may carry the purchase information of the content in the purchase fragment 112 and promote the purchase by offering a brief preview of the content, as well. This preview service is generally provided before content purchase in existing Internet music sites, which is also promising for the DVB system.

However, the preview service may be provided in different data at a different time from actual service data. Preview data for the preview service can be sent on a data transport channel configured to carry actual service data or on a separately procured ESG channel. Accordingly, there exists a need for a technique for effectively sending the preview data in the ESG data model.

### SUMMARY OF THE INVENTION

An aspect of the present invention is to substantially solve at least the above problems and/or disadvantages and to provide at least the advantages below. Accordingly, the present invention provides a method and apparatus for more efficiently providing a preview service in a digital broadcasting system.

The present invention also provides a method and apparatus for configuring a fragment needed to carry information required for a preview service in ESG data in a digital broadcasting system.

According to one aspect of the present invention, in a method of providing a preview service using an ESG in a digital broadcasting system, metadata of ongoing broadcasting services is collected. In the presence of preview data for the preview service among the collected metadata, information associated with the preview service is set in a Related Material element included in at least one of a service fragment, a content fragment, and a service bundle fragment in an ESG data model and representing referenced media data. ESG data including the fragments are generated and sent to a terminal.

According to another aspect of the present invention, in a method of providing a preview service using an ESG in a digital broadcasting system, ESG data is received from a broadcasting transmitter. It is determined if at least one of a service fragment, a content fragment, and a service bundle fragment in the ESG data includes a Related Material element indicating referenced media data. If the ESG data includes the Related Material element, it is determined if the Related Material element is used for the preview service. If the Related Material element is used for the preview service, information about the preview service from the Related Material element is acquired. When the user requests the preview service, preview data acquired using the information about the preview service is output to a user.

According to a further aspect of the present invention, in an apparatus for providing a preview service using an ESG in a digital broadcasting system, an ESG generator collects metadata of ongoing broadcasting services. In the presence of preview data for the preview service among the collected metadata, the ESG generator sets information associated with the preview service in a Related Material element included in at least one of a service fragment, a content fragment, and a service bundle fragment in an ESG data model and representing referenced media data. The ESG generator then generates ESG data including the fragments. A transmitter sends the ESG data to a terminal.

According to still another aspect of the present invention, in an apparatus for providing a preview service using an ESG in a digital broadcasting system, a receiver receives ESG data from a broadcasting transmitter. An ESG processor determines whether at least one of a service fragment, a content fragment, and a service bundle fragment in the ESG data includes a Related Material element indicating referenced media data. If the ESG data includes the Related Material element, the ESG processor determines if the Related Material element is used for the preview service. If the Related Material element is used for the preview service, the ESG processor acquires information about the preview service from the Related Material element. A user interface outputs preview data acquired using the information about the preview service to a user when the user requests the preview service.

### BRIEF DESCRIPTION OF THE DRAWINGS

The above and other objects, features and advantages of the present invention will become more apparent from the following detailed description when taken in conjunction with the accompanying drawings in which:
FIG. 1 is a graphical representation of an ESG data model;
FIG. 2 is a flowchart illustrating an operation of a transmitter using an ESG for a preview service according to the present invention;
FIG. 3 is a flowchart illustrating an operation of a receiver using the ESG for the preview service according to the present invention;
FIG. 4 is a graphical representation of an ESG data model for providing the preview service according to the present invention;
FIG. 5 is a flowchart illustrating an operation of a transmitter using the ESG for the preview service according to the present invention;
FIG. 6 is a flowchart illustrating an operation of a receiver using the ESG for the preview service according to the present invention;
FiG. 7 is a block diagram of the transmitter according to the present invention; and
FIG. 8 is a block diagram of the receiver according to a the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention adds the preview data of a preview service to additional information or control information other than broadcasting data, for transmission in a digital broadcasting system. As stated before, various transmission standards for digital broadcasting have been presented, including DAB, DVB and DMB. The present invention will be described in the context of a DVB system and its implementation, to which the present invention is not limited. Therefore, it is to be clearly understood that the present invention is applicable to any kind of system as long as they are configured and operated as described below.

A description will now be made of transmission of the preview data of a preview service according to various preferred embodiments of the present invention.

### Embodiment 1

Preview data is sent using one of the Information Elements (lEs) of the acquisition fragment, namely 'Zapping Support' element, in the afore-described ESG data model.

Zapping Support is an IE field defined for zapping data transmission in the acquisition fragment. Zapping data is displayed when the user zaps channels in the DVB system. Since a few seconds is required until service data is output from a changed channel, predetermined data is displayed to the user for the few seconds. This data is commonly referred to as zapping data. The zapping data can be an image, music, or moving picture. The Zapping Support element is typically comprised of a field providing the Universal Resource Identifier (URI) of the zapping data and a field providing a reference to a Session Description Protocol (SDP) file with session information required to access the URI.

In accordance with the present invention, the Zapping Support element is so configured as to enable transmission of preview data as well as zapping data. Similar to the zapping data, the preview data can be an image, music or moving picture. The Zapping Support element further includes link information indicating the URI of the preview data and a reference to an SDP file with session information required to access the URI. In this way, the terminal can acquire the preview data.

Transmission of the zapping data or the preview data (zapping/preview data) on a channel other than the channel carrying ESG data is referred to as an "out of band" transmission. Alternatively, the zapping/preview data can be sent in the ESG data, which is referred to as an "inlined" transmission. If the size of the zapping/preview data is large, the inlined transmission is not efficient, because it requires allocation of additional physical resources. If the zapping/preview data is small in size, the inlined transmission reduces the number of steps and the time required for the terminal to refer to the zapping/preview data.

To support inlined transmission using Zapping Support, Zapping Support is extended to enable transmission of zapping/preview data in an ESG stream.

Since Zapping Support is a complex scheme represented in eXtensible Markup Language (XML), a new signaling field is added to Zapping Support to indicate the classification of data included in the ESG data. In this case, it is possible to include zapping data as well as preview data in Zapping Support of the ESG data. The type of the signaling field is not limited so that it can be represented in any XML type.

As a major example, the following fields illustrated in Table 1 are added to the Zapping Support element of the acquisition fragment to send text or pictures as the zapping /preview data.

**Table 1**

| Field | Type |
|---|---|
| Name | TermNameType |
| Definition | TextualType |
| MediaLocator | MediaLocatorType |

Name describes the name of the transmitted data and its type is TermNameType. For details for TermNameType, refer to a Television Anytime (TVA) specification "European Telecommunications Standards Institute (ETSI) TS 102 822-3-1". Definition can provide a brief description of the transmitted data and its type is TextualType. For details of TextualType, refer to an MPEG specification "ISO/IEC 15938-5 MPEG-7". MediaLocator is a field that includes actual data or declares a reference to another communication link, and its type is MediaLocatorType. For details of MediaLocatorType, see an MPEG specification "ISO/IEC 15938-5 MEPG-7".

As described above, Zapping Support can serve two purposes. One is a zapping service and the other is a preview service. Unlike the zapping service, the preview service is initiated by user intervention. When receiving preview data, the terminal stores preview-related information (preview data or link information related to the preview data) acquired by Zapping Support, and then displays the preview data upon user request. On the other hand, with regards to the zapping service, the user does not need to be notified of whether a current displayed image is zapping data or actual broadcasting data. Therefore, the terminal operates differently in the two cases, and thus Zapping Support includes a signaling field indicating the classification of the transmitted data.

In accordance with the present invention, the signaling field is added in Zapping Support to indicate the classification of the transmitted data. The type of the signaling field is not limited so that it can be represented in any XML type. For example, it is possible to declare an attribute field indicating whether the transmitted data is preview data or not in a predetermined field of Zapping Support.

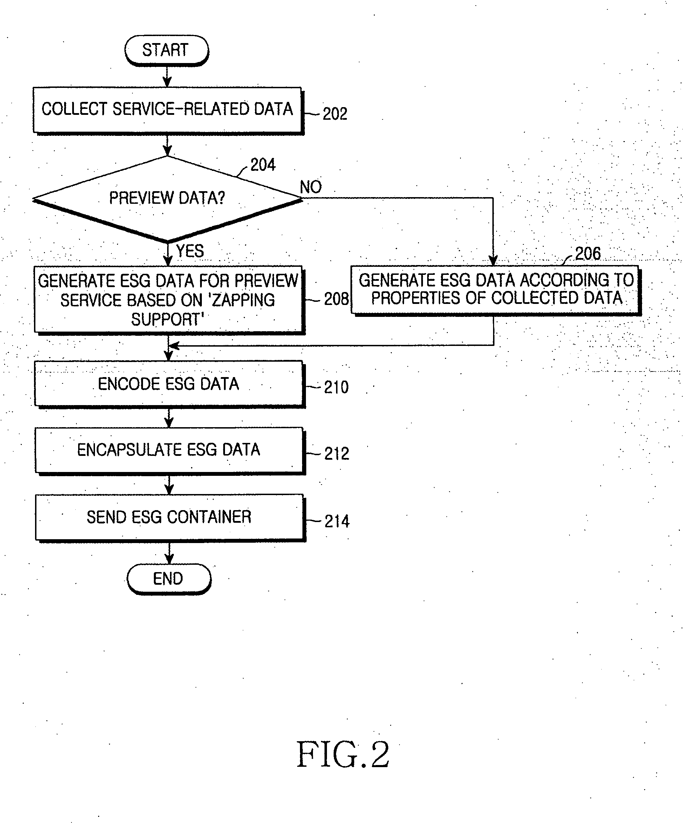

FIG. 2 is a flowchart illustrating an operation of a transmitter according to the present invention.

Referring to FIG. 2, the transmitter collects data associated with every service that it is currently providing, for transmission of ESG data in step 202. In step 204, the transmitter determines the presence or absence of preview data for a preview service among the collected data. In the absence of the preview data, the transmitter generates ESG data by processing the collected data according to the formats of corresponding fragments in step 206. On the other hand, in the presence of the preview data, the transmitter selects Zapping Support in an acquisition fragment and processes the preview data according to the format of Zapping Support, thereby generating ESG data including Zapping Support indicating the preview data in step 208. Zapping Support may include the preview data or information indicating a link from which the preview data can be acquired.

The ESG data generated in step 206 or step 208 is encoded on a fragment-by-fragment basis in step 210 and the encoded ESG fragments are collected in an ESG container being a unit of ESG data transmission in step 212. Generation of the ESG container is referred to as encapsulation of ESG data. In step 214, the ESG container is sent to the terminal in one or more IP streams.

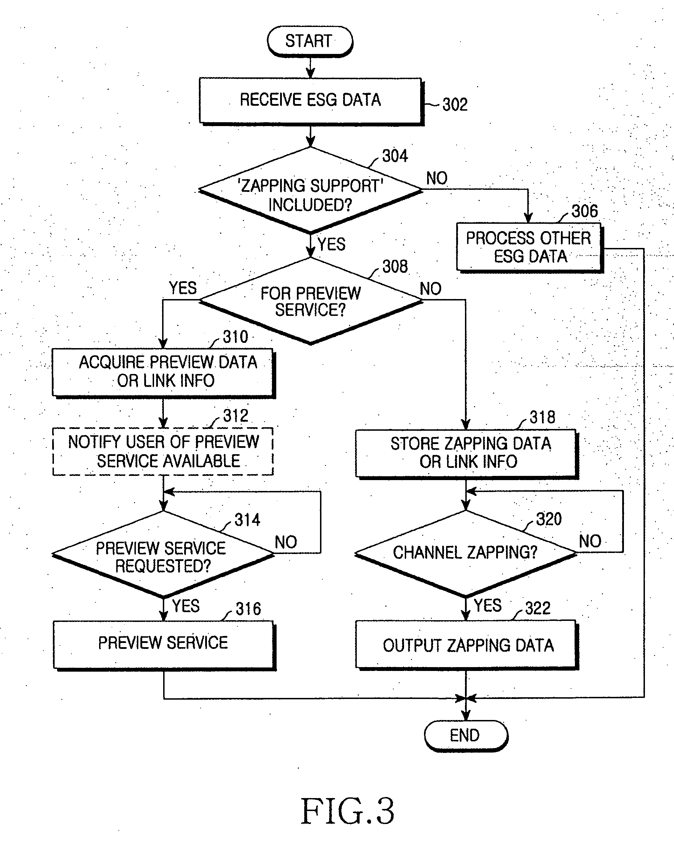

FIG. 3 is a flowchart illustrating an operation of a receiver according to the present invention.

Referring to FIG. 3, the receiver receives ESG data from the transmitter in step 302 and determines if an acquisition fragment in the ESG data has Zapping Support in step 304. In the absence of Zapping Support, the receiver processes the ESG data according to their usages in step 306.

In the presence of Zapping Support, the receiver determines if the Zapping Support supports a preview service, referring to a signaling field inserted in Zapping Support in step 308. The signaling field is declared in Zapping Support, indicating whether data represented by Zapping Support is related to the zapping service or the preview service.

If the receiver determines from the signaling field that Zapping Support supports the preview service, it acquires preview data from Zapping Support in step 310. In another case, the receiver acquires link information for the preview service from Zapping Support and stores it. In step 312, the receiver notifies the user that a preview of corresponding contents is available based on the stored preview data or link information. The notification can be made in various ways, for example, visually or audibly, which is beyond the scope of the present invention and thus will not be described in detail. The receiver may perform no operation associated with the preview data until the user requests the preview service.

If the user requests the preview service in step 314, the receiver displays the preview data in step 316. The preview data can be contents stored in the receiver or contents received based on link information stored at the time the preview service is requested. The type of the preview data is known from Zapping Support.

On the other hand, if the receiver determines from the signaling field that Zapping Support is for the zapping service, the receiver stores the zapping data or link information associated with the zapping data according to Zapping Support in step 318 and waits until the user changes a channel in step 320. Upon generation of the channel change event, the receiver displays the zapping data in step 322. The zapping data is contents acquired from Zapping Support and stored in the receiver or contents received based on link information indicated by Zapping Support. The type of the zapping data is known from Zapping Support.

An exemplary XML syntax of Zapping Support including inlined data is given as follows:

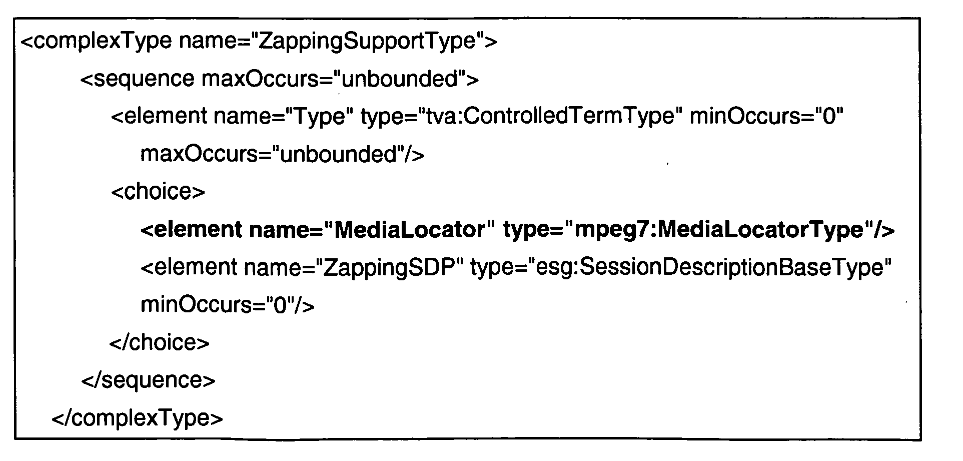

In the above XML syntax, contents of zapping data "mepg7:MediaLocatorType" are included as "MediaLocator".

### Embodiment 2

Preview data is sent using a Related Material element, which is basic ESG data.

In predetermined fragments, Related Material references other media data. Specifically, Related Material is included in at least one of the content fragment 106, the service fragment 102, and the service bundle fragment 110. Related Material is comprised of a HowRelated field indicating the relationship between referred media data and a corresponding fragment, a MediaLocator field indicating the position of the referred media data, and an optional field used to represent advertisement information. HowRelated and MediaLocator are mandatory to Related Material.

It is possible to represent both out of band transmission and inlined transmission with Related Material. Related Material includes a signaling field indicating the classification of transmitted data, or specifies the classification of the transmitted data in an existing field. The type of the signaling field is not limited so that it can be represented in any XML type. For example, it is possible to declare an attribute indicating whether the transmitted data is preview data or not.

Any existing field that the terminal can mechanically interpret can be used to specify the classification of the transmitted data. For example, the existing field can be HowRelated in Related Material. The type of HowRelated is ControlledTermType as illustrated in Table 2. For ControlledTermType, see a TVA specification "ETSI TS 102 822-3-1 ".

**Table 2**

| Field | Type |
|---|---|
| HowRelated | ControlledTermType |

If HowRelated indicates the classification of the transmitted data by ControlledTermType, a description of the preview service can be sent in text. The text "preview data" itself is delivered in HowRelated. In this case, the terminal simply determines that the transmitted data is text by its internal processing, not knowing that the text signifies preview data. The type of HowRelated is declared as Integer as illustrated in Table 3.

**Table 3**

| Field | Type |
|---|---|
| HowRelated | Integer |

If HowRelated specifies the classification of the transmitted data by the 'Integer' type, the description can take the form of an integer. That is, a integer indicating "preview data" substitutes for the text "preview data" itself. The terminal determines the classification of the transmitted data represented by HowRelated by interpreting the integer according to a predetermined rule. For example, a Classification Scheme (CS) table is preset between the transmitter and the terminal, in which an integer '1' indicates preview data, an integer '2' indicates logo data, and an integer '3' indicates advertisement data. Hence, the terminal determines from HowRelated whether the data sent by the Related Material element is preview data or not.

Aside from HowRelated in Related Material, any other field is available to specify the classification of the transmitted data. Also, such a field can take a type other than 'Integer' as long as it can identify the transmission of the preview data.

An exemplary XML syntax of Related Material is given as:

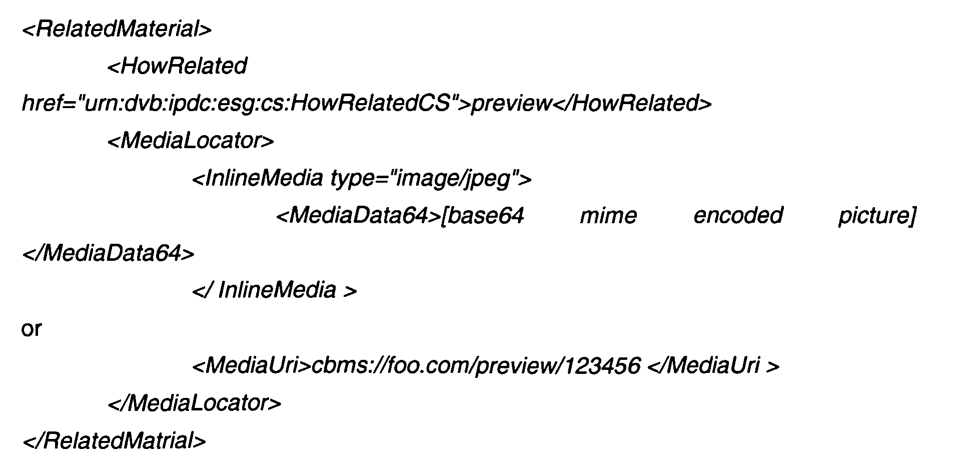

The above HowRelated syntax necessarily contains a reference indicating the format type of HowRelated. For example, "urn:dvb:ipdc:esg:cs:HowRelatedCS" indicates a reference to a CS table defined by DVB-IPDC (IP Data Casting) or DVB-CBMS (Convergence of Broadcast and Mobile Services), 'HowRelatedCS' and the CS table is made up in compliance with the DVB-IPDC (or DVB-CBMS) standard. The CS table specifies the meanings of specific integers that HowRelated may have. For an integer set in HowRelated, the terminal can decide whether or not the integer indicates preview data, referring to the CS table.

While the above XML syntax presents a string value "preview" as HowRelated, HowRelated can be set to an integer such as '1' or '2', as stated above. MediaLocator provides inlined preview data in an InlineMedia field or link, information of the preview data for out-of-band transmission in a MediaUri field. In case of preview data in the form of InlineMedia, it has a Multipurpose Internet Mail Extension (MIME) type called "image/jpeg" and a MediaData64 field indicates that the preview data is in a "base64Binary" format defined by MPEG7.

MediaUri provides the link information of the preview data positioned in a predetermined DVB-IPDC (or DVB-CBMS) server, such as "cbms://foo.com/preview/123456".

### Embodiment 3

Related Material is declared in an independent fragment, for example, a preview fragment, and other fragments are configured to provide a reference to the preview fragment.

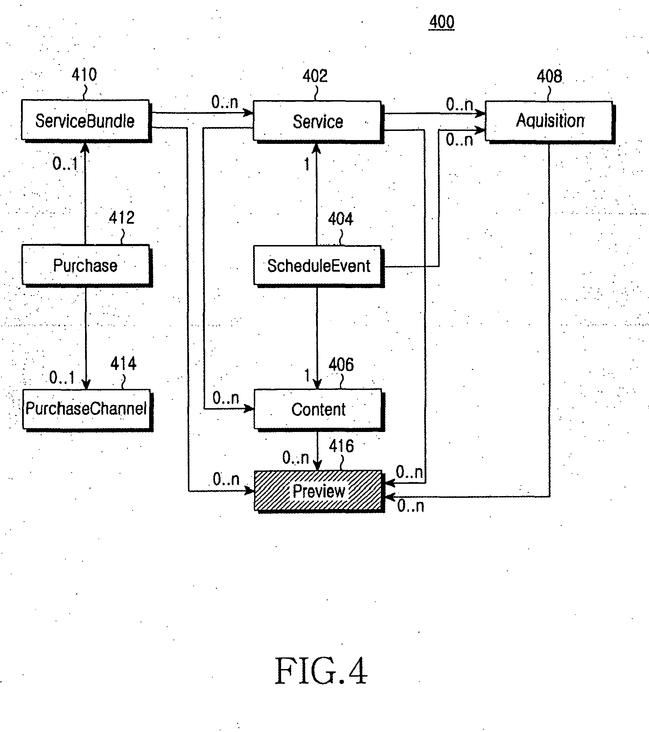

FIG. 4 is a graphical representation of an ESG data model for providing the preview service according to the present invention.

Referring to FIG. 4, an ESG data model 400 includes a service fragment 402, a schedule event fragment 404, a content fragment 406, an acquisition fragment 408, a service bundle fragment 410, a purchase fragment 412, a purchase channel fragment 414, and a preview fragment 416.

The preview fragment 416 contains the Related Material element described in the present invention and a preview fragment ID so that it can be referred to by the service fragment 402, the content fragment 406, the acquisition fragment 408, and a service bundle fragment 410. The preview fragment ID is necessary for other fragments to provide a reference to the preview fragment 416. A plurality of preview fragments are identified by their specific preview fragment IDs. Also when another preview fragment references the preview fragment 416, the ID of the preview fragment 416 is used for accurate indication.

The preview fragment 416 may support the zapping service as well as the preview service. To support the zapping service, the acquisition fragment 408 references the preview fragment 416. In this case, zapping data or its link information is delivered in the preview fragment 416 without declaring Zapping Support in the acquisition fragment 408.

Since the Related Material element is commonly used for the preview service in the embodiments of the present invention, the transmitter and the receiver operate in the same manner. Therefore, each of their operations will be described with a single flowchart.

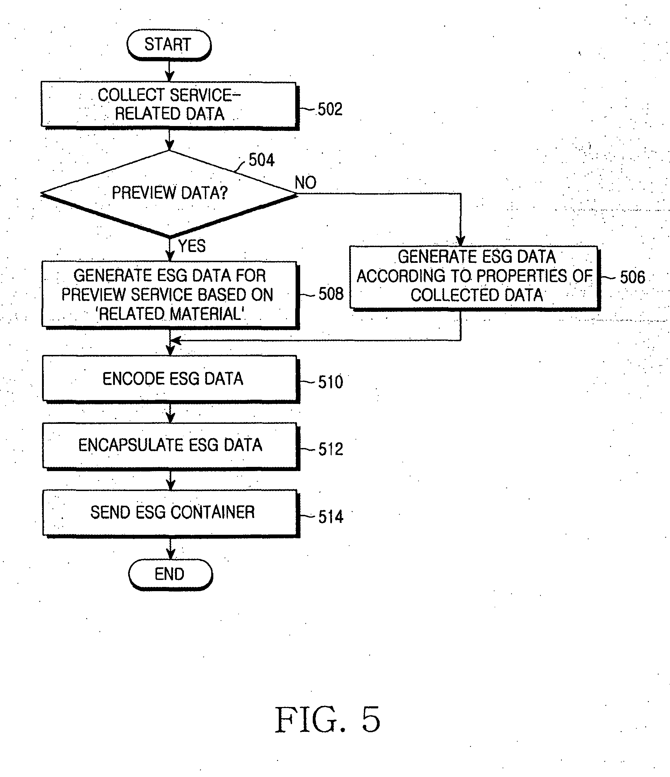

FIG. 5 is a flowchart illustrating an operation of the transmitter according to the present invention.

Referring to FIG. 5, the transmitter collects data associated with every service that it is currently providing, for transmission of ESG data in step 502. In step 504, the transmitter determines the presence or absence of preview data for a preview service among the collected data. In the absence of the preview data, the transmitter generates ESG data by processing the collected data according to the formats of corresponding fragments in step 506. In the presence of the preview data, the transmitter selects Related Material and processes the preview data according to the format of Related Material, thereby generating ESG data including the Related Material element providing the preview data in step 508. Related Material may include the preview data or information indicating a link from which the preview data can be acquired.

The ESG data generated in step 506 or step 508 is encoded on a fragment-by-fragment basis in step 510 and the encoded ESG fragments are collected in an ESG container being a unit of ESG data transmission in step 512. Generation of the ESG container is referred to as encapsulation of ESG data. In step 514, the ESG container is sent to the terminal in one or more IP streams.

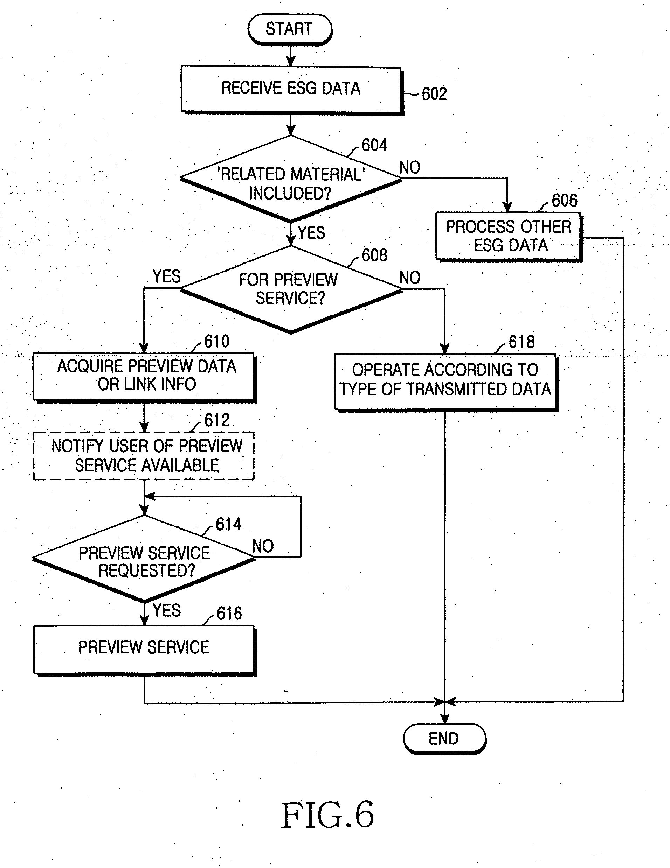

FIG. 6 is a flowchart illustrating an operation of a receiver according to the present invention.

Referring to FIG. 6, the receiver receives ESG data from the transmitter in step 602 and determines if a predetermined fragment in the ESG data has Related Material in step 604. The Related Material element is included in a plurality of fragments (a service fragment, a content fragment, or a service bundle fragment) in one embodiment of the present invention, and in a preview fragment in another embodiment of the present invention. In the absence of Related Material, the receiver processes the ESG data according to their usages in step 606.

In the presence of Related Material, the receiver determines if Related Material supports a preview service, referring to a signaling field inserted in Related Material in step 608. The signaling field is declared in Related Material, indicating if data represented by Related Material is related to the preview service.

In the case where Related Material is included in the independent preview fragment and the preview fragment is used to support the zapping service and the preview service, the receiver determines a fragment which references Related Material of the preview fragment. If an acquisition fragment references Related Material, the receiver determines that Related Material is used for the zapping service. If a content fragment references Related Material, the receiver determines that Related Material is used for the preview service. If Related Material is simultaneously referenced by the acquisition fragment and the content fragment, the receiver uses Related Material for the zapping service when zapping channels, and for the preview service upon request of the preview service.

If the receiver determines from the signaling field that Related Material supports the preview service, the receiver acquires preview data from Related Material in step 610. In another case, the receiver acquires link information for the preview service from Related Material and stores it. In step 612, the receiver notifies the user that a preview of corresponding contents is available based on the stored preview data or link information. The notification can be made in various ways, for example, visually or audibly, which is beyond the scope of the present invention and thus will not be described in detail. The receiver may perform no operation associated with the preview data until the user requests the preview service.

If the user requests the preview service in step 614, the receiver displays the preview data in step 616. Information stored in relation to the preview service is content acquired from Related Material in the ESG data or link information indicating the position of a server that provides the preview data. The type of the preview data is known from Related Material. If the link information is stored, the receiver downloads the preview data from the server indicated by the link information, when the user requests the preview service.

If the receiver determines from the signaling field of Related Material that Related Material is not for the preview service, the receiver operates according to the type of data indicated by Related Material in step 618.

The transmitter and the receiver have the same configurations in the present invention. Thus, the following description made of the configurations of the transmitter and the receiver applies commonly to all embodiments of the present invention.

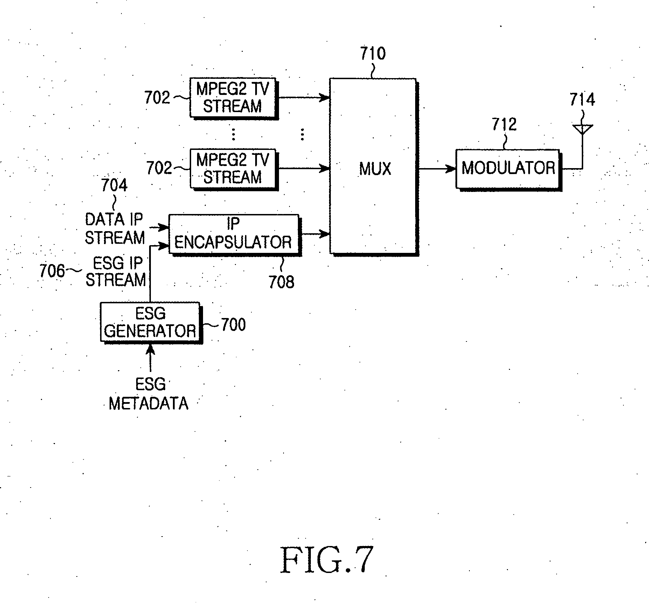

FIG. 7 is a block diagram of the transmitter according to the present invention.

Referring to FIG. 7, the DVB transmitter receives a plurality of MPEG2 streams 702 as TV streams, and data IP streams 704 as well. The data IP streams 704 can be IP service data. An ESG generator 700 collects ESG metadata as an ESG of the MPEG2 TV streams 702 and the data IP streams 704, generates ESG data out of the ESG metadata according to one of the embodiments, and encodes the fragments of the ESG data, thereby creating at least one ESG IP stream 706. The ESG data contains information about preview data for the preview service.

An IP encapsulator 708 encapsulated the IP streams 704 and 706 in an MPEG2 TS and a multiplexer (MUX) 710 multiplexes the MPEG2 TS with the MPEG2 TV streams 702. A modulator 712 modulates the multiplexed TSs to an Orthogonal Frequency Division Multiplexing (OFDM) symbol and sends the OFDM symbol through an antenna 714.

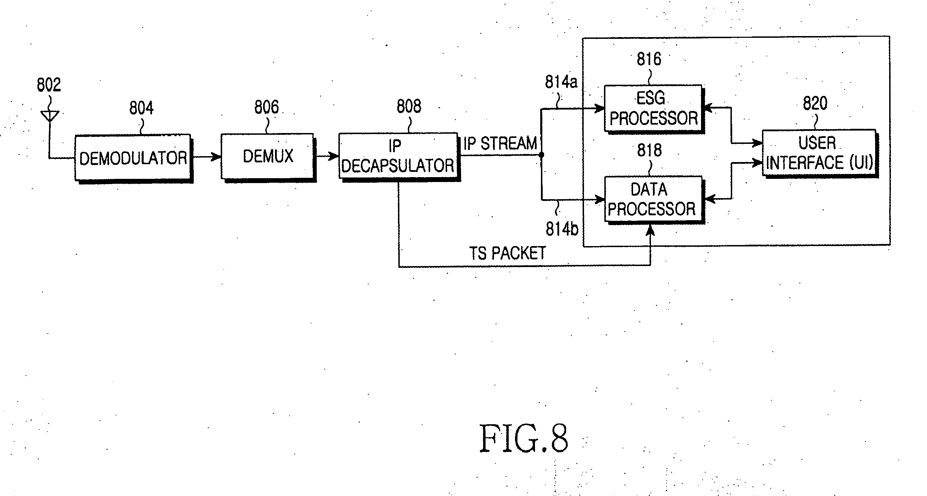

FIG. 8 is a block diagram of the receiver according to a preferred embodiment of the present invention.

Referring to FIG. 8, a demodulator 804 OFDM-demodulates a signal received through an antenna 802 and a demultiplexer (DEMUX) 806 demultiplexes the OFDM-demodulated signal into encapsulated IP streams 810 and MPEG2 TS packet streams 812. A data processor 818 subjects the TS packet streams 812 to a set of processes including MPEG demodulation in order to display a corresponding service to the user. An IP decapsulator decapsulates the encapsulated IP packet streams to IP streams 810 including ESG IP streams 814a and data IP streams 814b.

In this fashion, the TS packet streams 812 and the data IP stream 814b are provided to the data processor 818, while the ESG IP stream 814a is provided to an ESG processor 816. The ESG processor 816 acquires ESG data by interpreting the ESG stream 814a. Upon detection of preview data for the preview service or its link information from a predetermined fragment of the ESG data, the ESG processor 816 stores the preview data or the link information as stated earlier, and notifies the user that a preview of a corresponding service is available. If the user invokes the preview service via a user interface 820, the ESG processor 816 outputs the stored preview data or the preview data acquired using the link information audibly and visually to the user via the user interface 820.

In accordance with the present invention as described above, a preview service is efficiently provided in a digital broadcasting system by configuring a fragment in ESG data and sending information required for the preview service in the ESG data using the fragment.

While the invention has been shown and described with reference to certain preferred embodiments thereof, it will be understood by those skilled in the art that various changes in form and details may be made therein without departing from the spirit and scope of the invention as defined by the appended embodiments.

### The following is a list of further preferred embodiments of the invention:

Embodiment 1: A method of providing a preview service using an Electronic Service Guide (ESG) in a digital broadcasting system, comprising the steps of:
   collecting metadata of ongoing broadcasting services;
   setting information associated with the preview service in a Related Material element, in the presence of preview data for the preview service among the collected metadata, the Related Material element included in at least one of a service fragment, a content fragment, and a service bundle fragment in an ESG data model and representing referenced media data;
   generating ESG data including the fragments; and
   sending the ESG data to a terminal.
Embodiment 2: The method of embodiment 1, wherein the Related Material element includes a HowRelated field indicating that the Related Material element is used for the preview service.
Embodiment 3: The method of embodiment 2, wherein the HowRelated field is set to an integer to indicate that the Related Material element is used for the preview service.
Embodiment 4: The method of embodiment 3, wherein the integer is referred to in a Classification Scheme (CS) table or a CS table indicated by the Related Material element.
Embodiment 5: The method of embodiment 1, wherein the Related Material element includes a Media Locator field including the preview data or link information from which the preview data is acquired.
Embodiment 6: A method of providing a preview service using an Electronic Service Guide (ESG) in a digital broadcasting system, comprising the steps of:
   receiving ESG data from a broadcasting transmitter;
   determining if at least one of a service fragment, a content fragment, and a service bundle fragment in the ESG data includes a Related Material element indicating referenced media data;
   determining if the Related Material element is used for the preview service if the ESG data includes the Related Material element;
   acquiring information about the preview service from the Related Material element if the Related Material element is used for the preview service; and
   outputting preview data acquired using the information about the preview service when a user requests the preview service.
Embodiment 7: The method of embodiment 6, wherein the Related Material element includes a HowRelated field indicating that the Related Material element is used for the preview service.
Embodiment 8: The method of embodiment 7, wherein the HowRelated field is set to an integer to indicate that the Related Material element is used for the preview service.
Embodiment 9: The method of embodiment 8, wherein the integer is referred to in a Classification Scheme (CS) table or a CS table indicated by the Related Material element.
Embodiment 10: The method of embodiment 6, wherein the Related Material element includes a Media Locator field including the preview data or link information from which the preview data is acquired.
Embodiment 11: The method of embodiment 6, wherein the preview data outputting step comprises, if the information about the preview service is link information indicating the position of the preview data, downloading the preview data using the link information when the user requests the preview service.
Embodiment 12: An apparatus for providing a preview service using an Electronic Service Guide (ESG) in a digital broadcasting system, comprising:
   an ESG generator for collecting metadata of ongoing broadcasting services, setting information associated with the preview service in a Related Material element, in the presence of preview data for the preview service among the collected metadata, the related material element included in at least one of a service fragment, a content fragment, and a service bundle fragment in an ESG data model and representing referenced media data, and generating ESG data including the fragments; and
   a transmitter for sending the ESG data to a terminal.
Embodiment 13: The apparatus of embodiment 12, wherein the Related Material element includes a HowRelated field indicating that the Related Material element is used for the preview service.
Embodiment 14: The apparatus of embodiment 13, wherein the HowRelated field is set to an integer to indicate that the Related Material element is used for the preview service.
Embodiment 15: The apparatus of embodiment 14, wherein the integer is referred to in a Classification Scheme (CS) table or a CS table indicated by the Related Material element.
Embodiment 16: The apparatus of embodiment 12, wherein the Related Material element includes a Media Locator field including the preview data or link information from which the preview data is acquired.
Embodiment 17: An apparatus for providing a preview service using an Electronic Service Guide (ESG) in a digital broadcasting system, comprising:
   a receiver for receiving ESG data from a broadcasting transmitter;
   an ESG processor for determining if at least one of a service fragment, a content fragment, and a service bundle fragment in the ESG data includes a Related Material element indicating referenced media data, determining if the Related Material element is used for the preview service if the ESG data includes the Related Material element, and acquiring information about the preview service from the Related Material element if the Related Material element is used for the preview service; and
   a user interface for outputting preview data acquired using the information about the preview service to a user when the user requests the preview service.
Embodiment 18: The apparatus of embodiment 17, wherein the Related Material element includes a HowRelated field indicating that the Related Material element is used for the preview service.
Embodiment 19: The apparatus of embodiment 18, wherein the HowRelated field is set to an integer to indicate that the Related Material element is used for the preview service.
Embodiment 20: The apparatus of embodiment 19, wherein the integer is referred to in a Classification Scheme (CS) table or a CS table indicated by the Related Material element.
Embodiment 21: The apparatus of embodiment 17, wherein the Related Material element includes a Media Locator field including the preview data or link information from which the preview data is acquired.
Embodiment 22: The apparatus of embodiment 17, wherein if the information about the preview service is link information indicating the position of the preview data, the ESG processor downloads the preview data using the link information when the user requests the preview service.
Embodiment 23: A method of providing a zapping service using an Electronic Service Guide (ESG) in a digital broadcasting system, comprising the steps of:
   collecting data associated with the zapping service to be displayed when broadcasting services are zapped;
   including zapping data for the zapping service in a Zapping Support element of an acquisition fragment in an ESG data model and generating ESG data including the acquisition fragment; and
   sending the ESG data to a terminal.
Embodiment 24: The method of embodiment 23, wherein the zapping data includes at least one of an image, music, and a moving picture to be displayed at a receiver when services are zapped.
Embodiment 25: A method of providing a zapping service using an Electronic Service Guide (ESG) in a digital broadcasting system, comprising the steps of:
   receiving ESG data from a broadcasting transmitter;
   determining if an acquisition fragment of the ESG data includes a Zapping Support element associated with the zapping service to be provided when broadcasting services are zapped;
   acquiring and storing the zapping data from the Zapping Support element, if the ESG data includes the Zapping Support element; and
   outputting the stored zapping data when a user requests service zapping.
Embodiment 26: The method of embodiment 25, wherein the zapping data includes at least one of an image, music, and a moving picture to be displayed at a receiver when services are zapped.

## Claims

1. A method for providing a zapping service using an Electronic Service Guide (ESG) by a broadcasting transmitter in a digital broadcasting system, comprising the steps of:
including zapping data for a zapping service in a Zapping Support field of an acquisition fragment in an ESG data model and generating ESG data including the acquisition fragment; and
transmitting the ESG data to a terminal,
wherein the zapping data is associated with the zapping service to be displayed when broadcasting services are zapped at a receiver.

2. The method of claim 1, wherein the zapping data is provided in form of inlined data in the ESG data.

3. A method for receiving a zapping service using an Electronic Service Guide (ESG) by a broadcasting receiver in a digital broadcasting system, comprising the steps of:
receiving ESG data from a broadcasting transmitter;
determining if an acquisition fragment of the ESG data includes a Zapping Support field associated with the zapping service to be provided when broadcasting services are zapped;
acquiring and storing the zapping data from the Zapping Support element, if the ESG data includes the Zapping Support field; and
outputting the stored zapping data when a user requests service zapping.

4. The method of claim 3, wherein the zapping data is provided in form of inlined data in the ESG data.

5. The method of claim 2 or the method of claim 4, wherein Zapping Support using the inlined data is signaled in the Zapping Support field of an acquisition fragment.

6. The method of claim 1 or claim 3, wherein type of the zapping data signaled in the Zapping Support field of an acquisition fragment.

7. The method of any preceding claim, wherein the zapping data includes at least one of an image, music, and a moving picture to be displayed at a receiver when the services are zapped.

8. A broadcasting transmitter for providing a zapping service using an Electronic Service Guide (ESG) in a digital broadcasting system, comprising:
a controller for including zapping data for a zapping service in a Zapping Support field of an acquisition fragment in an ESG data model and generating ESG data including the acquisition fragment; and
a transmitter for transmitting the ESG data to a terminal,
wherein the zapping data is associated with the zapping service to be displayed when broadcasting services are zapped at a receiver.

9. The broadcasting transmitter of claim 8, wherein the zapping data is provided in form of inlined data in the ESG data.

10. A broadcasting receiver for receiving a zapping service using an Electronic Service Guide (ESG) in a digital broadcasting system, comprising the steps of:
a receiver for receiving ESG data from a broadcasting transmitter;
a controller for determining if an acquisition fragment of the ESG data includes a Zapping Support field associated with the zapping service to be provided when broadcasting services are zapped, acquiring the zapping data from the Zapping Support element, if the ESG data includes the Zapping Support field, and outputting the acquired zapping data when a user requests service zapping.

11. The broadcasting receiver of claim 10, wherein the zapping data is provided in form of inlined data in the ESG data.

12. The broadcasting transmitter of claim 9 or the broadcasting receiver of claim 11, wherein Zapping Support using the inlined data is signaled in the Zapping Support field of an acquisition fragment.

13. The broadcasting transmitter of claim 8 or the broadcasting receiver of claim 10, wherein type of the zapping data signaled in the Zapping Support field of an acquisition fragment.

14. The broadcasting transmitter of any preceding claim or the broadcasting receiver of any preceding claim, wherein the zapping data includes at least one of an image, music, and a moving picture to be displayed at a receiver when the services are zapped.
